# EUROPÄISCHE PATENTANMELDUNG

(11) **EP 3 702 689 A1**
(43) Veröffentlichungstag der Anmeldung: **02.09.2020**
(21) Anmeldenummer: 19160042.8
(22) Anmeldetag: 28.02.2019
(51) Int. Cl.: F24H 1/10, F24H 9/20

(54) **DURCHLAUFERHITZER MIT EINER SICHERHEITSSCHALTUNG**

(71) Anmelder: Gerdes Holding GmbH & Co. KG, 21337 Lüneburg (DE)
(72) Erfinder: Koch, Christian, 21403 Wendisch Evern (DE)
(74) Vertreter: Stork Bamberger Patentanwälte PartmbB

(57) **Zusammenfassung**

Die Erfindung betrifft einen Durchlauferhitzer zum Erwärmen einer Flüssigkeit, umfassend eine fluidgängige Kanalanordnung mit mindestens einem zum Erwärmen der Flüssigkeit eingerichteten Heizkanal mit mindestens einem darin angeordneten elektrischen Heizelement, einer Steuerelektronik, die eingerichtet ist, elektronische Leistungsschalter anzusteuern, um das mindestens eine Heizelement elektrisch zu betreiben und die Heizleistung des Heizelements zu steuern, wobei die Steuerelektronik als Mikroprozessor-Steuerung ausgebildet ist, eine Durchflussmesseinrichtung, die elektrisch mit der Steuerelektronik verbunden und eingerichtet ist, den durch die Kanalanordnung fließenden Volumenstrom der Flüssigkeit zu erfassen und ein gepulstes Messsignal bereitzustellen, wobei die Anzahl der Pulse des Messsignals mit der Größe des Volumenstromes korreliert und sich dadurch auszeichnet, dass der Durchlauferhitzer eine Sicherheitsschaltung (10) umfasst, die eingangsseitig mit der Durchflussmesseinrichtung und ausgangsseitig mit der Steuerelektronik verbunden ist, um eine Versorgungsspannung zur Ansteuerung der elektronischen Leistungsschalter in Abhängigkeit davon bereitzustellen, ob der mittels der Durchflussmesseinrichtung erfasste Volumenstrom größer als eine Mindestvolumenstromvorgabe ist.

## Beschreibung

Die vorliegende Erfindung betrifft einen Durchlauferhitzer zum Erwärmen einer Flüssigkeit umfassend eine fluidgängige Kanalanordnung mit mindestens einem zum Erwärmen der Flüssigkeit eingerichteten Heizkanal mit mindestens einem darin angeordneten elektrischen Heizelement, einer Steuerelektronik, die eingerichtet ist, elektronische Leistungsschalter anzusteuern, um das mindestens eine Heizelement elektrisch zu betreiben und die Heizleistung des Heizelements zu steuern, wobei die Steuerelektronik als Mikroprozessor-Steuerung ausgebildet ist, eine Durchflussmesseinrichtung, die elektrisch mit der Steuerelektronik verbunden und eingerichtet ist, den durch die Kanalanordnung fließenden Volumenstrom der Flüssigkeit zu erfassen und ein gepulstes Messsignal bereitzustellen, wobei die Anzahl der Pulse des Messsignals mit der Größe des Volumenstromes korreliert. Derartige Durchlauferhitzer sind aus dem Stand der Technik hinlänglich bekannt. Beispielsweise zeigt das Dokument DE 10 2008 011 117 A1 einen Durchlauferhitzer mit einem Durchflussmesser, der als Messturbine ausgebildet ist, die einen Pulsausgang aufweist. Mittels der Messturbine wird der Volumenstrom bzw. die Durchflussmenge des durch die Heizeinrichtung strömenden Fluids gemessen, wobei die Anzahl der Pulse pro Zeiteinheit eine Funktion des Volumenstroms ist. Die Pulssignale werden auf ein Zeitglied gegeben, das durch einen Mikrocontroller gebildet wird. Unterschreitet die Durchflussmenge des Fluids ein Mindestvolumen, oder bleiben die Durchflusssignale des Durchflussmessers vollständig aus, führt es zum Schalten des Zeitgliedes. Zudem wird in diesem Fall das Heizelement des Durchlauferhitzers zum Schutz vor Überhitzung ausgeschaltet.

Nachteilig ist, dass die Sicherheitsabschaltung des Heizelements durch den Mikrocontroller der Steuerschaltung selbst erfolgt. Etwaige Fehlfunktionen des Mikrocontrollers und/oder des mit dem Mikrocontroller ausgeführten Programmes können dazu führen, dass beim Unterschreiten des Mindestvolumenstroms nicht in jedem Fall garantiert ist, dass die Heizung zuverlässig abgeschaltet wird. Es ist daher Aufgabe der vorliegenden Erfindung, einen Durchlauferhitzer vorzuschlagen, der ein zuverlässiges Abschalten des mindestens einen Heizelements bei zu geringem Volumenstrom der zu erwärmenden Flüssigkeit gewährleistet, und zwar auch dann, wenn die Steuerelektronik zur Steuerung der Heizleistung gestört oder beeinträchtigt ist.

Die Aufgabe wird durch einen Durchlauferhitzer mit den eingangs genannten Merkmalen dadurch gelöst, dass der Durchlauferhitzer eine Sicherheitsschaltung umfasst, die eingangsseitig mit der Durchflussmesseinrichtung verbunden ist und ausgangsseitig mit der Steuerelektronik verbunden ist, um eine Versorgungsspannung zur Ansteuerung der elektronischen Leistungsschalter in Abhängigkeit davon bereitzustellen, ob der mittels der Durchflussmesseinrichtung erfasste Volumenstrom größer als eine Mindestvolumenstromvorgabe ist. Die erfindungsgemäße Sicherheitsschaltung bietet den Vorteil, dass unabhängig von der Steuerelektronik in dem Fall, dass der in der Kanalanordnung fließende Volumenstrom der Flüssigkeit die Mindestvolumenstromvorgabe unterschreitet, die Beheizung des mindestens einen Heizelements zuverlässig abgeschaltet wird. Dieser Abschaltvorgang erfolgt separat und vollständig unabhängig von der Steuerelektronik. Mögliche Störungen der Steuerelektronik, insbesondere im Programmablauf der Mikroprozessor-Steuerung, Systemabstürze oder ein "Aufhängen" des Mikroprozessors beeinflussen die ordnungsgemäße Abschaltung der Beheizung des mindestens einen Heizelements mittels der Sicherheitsschaltung nicht. Vorteilhafterweise ist die Steuerelektronik ebenfalls ausgebildet und eingerichtet, beim Erkennen eines Unterschreitens der Mindestvolumenstromvorgabe das mindestens eine Heizelement elektrisch abzuschalten. Hierdurch ist ein hohes Maß an Redundanz gegeben. Solang ein ordnungsgemäßes Funktionieren der Steuerelektronik gegeben ist, kann das Abschalten des mindestens einen Heizelements im Fall eines Volumenstrommangels mittels der als Mikroprozessor-Steuerung ausgebildeten Steuerelektronik erfolgen. In jedem Fall erfolgt das Abschalten des mindestens einen Heizelements im Volumenstrommangelfall mittels der erfindungsgemäßen Sicherheitsschaltung, die unabhängig von der Funktionsfähigkeit der Steuerelektronik zu den genannten Bedingungen das mindestens eine Heizelement abschaltet.

Eine zweckmäßige Ausgestaltung der Erfindung ist dadurch gekennzeichnet, dass die Sicherheitsschaltung mindestens einen Digitalzähler umfasst, dessen Zähleingang mit der Durchflussmesseinrichtung verbunden ist, so dass das gepulste Messsignal an dem Zähleingang des Digitalzählers anliegt, wobei mindestens ein Zählerausgang des Digitalzählers mit dem Eingang eines elektronischen Schaltelements verbunden ist, das entsprechend des Zustandes des Zählerausgangs die Versorgungsspannung zur Ansteuerung der Leistungsschalter freigibt oder sperrt. Vorteilhafterweise wird so die Versorgungsspannung zur Ansteuerung der Leistungsschalter erst dann freigegeben, wenn eine vorgegebene Anzahl von Impulsen der Durchflussmesseinrichtung über den Zählereingang des Digitalzählers verarbeitet worden sind. So wird sichergestellt, dass die Beheizung der Heizelemente erst dann erfolgt, wenn mittels der Durchflussmesseinrichtung auch tatsächlich das Vorhandensein des Volumenstroms in der Kanalanordnung detektiert worden ist. Diese Sicherheitsfunktion ist insbesondere auch dann gegeben, wenn die Steuerelektronik gestört oder funktionsunfähig ist, beispielsweise durch einen fehlerhaften Programmablauf der Mikroprozessor-Steuerung.

Eine bevorzugte Weiterbildung der Erfindung zeichnet sich dadurch aus, dass der Digitalzähler mindestens einen Zählersperreingang aufweist und, dass dieser Zählersperreingang mit dem mindestens einen Zählerausgang elektrisch verbunden ist. Anders ausgedrückt ist der Digitalzähler so geschaltet, dass dieser in Selbsthaltung geht, sobald ein Zählerstand erreicht ist, der den jeweiligen Zählerausgang von einem Low-Pegel zu einem High-Pegel wechseln lässt. Auf diese Weise wird - ohne das weitere Komponenten oder Bauelemente erforderlich wären - erreicht, dass die Sicherheitsschaltung monostabil eingerichtet ist, also den Zustand der Bereitstellung der Versorgungsspannung zur Ansteuerung der elektronischen Leistungsschalter selbsttätig beibehält, solang der mittels der Durchflussmesseinrichtung erfasste Volumenstrom größer als die Mindestvolumenstromvorgabe ist. Erst wenn der erfasste Volumenstrom diese Mindestvolumenstromvorgabe unterschreitet oder sogar vollständig auf null absinkt, wird dieser Zustand wieder verlassen.

Gemäß einer weiteren bevorzugten Ausbildung der Erfindung ist der Digitalzähler als Ringzähler ausgebildet. Dies Ausbildung als Ringzähler bietet den Vorteil, dass die Zählerausgänge des Digitalzählers nicht binärkodiert eingerichtet sind, sondern jeder Zählerstand mit einem Wechsel des Ausgangspegels eines der Zählerausgänge verknüpft ist. Nach Zählen eines Impulses wird beispielsweise der Ausgang null aktiviert, während nach Zählung von n Impulsen der jeweils n-te Zählerausgang aktiviert wird. So ist es auf besonders einfache Weise möglich, durch Verbinden eines der Zählerausgänge mit dem Zählersperreingang zu bestimmen, bei welchem Zählerstand die Digitalzählerschaltung in Selbsthaltung geben soll. Durch Wahl eines anderen Zählerausgangs lässt sich auf besonders einfache Weise anpassen, welcher Zählerstand erreicht werden muss, bevor die Sicherheitsschaltung in den Selbsthaltungszustand zur Bereitstellung der Versorgungsspannung zur Ansteuerung der elektronischen Leistungsschalter übergeht.

Eine weitere zweckmäßige Ausbildung der Erfindung ist dadurch gekennzeichnet, dass der Digitalzähler einen Rücksetz-Eingang aufweist, der mit einem Digitalausgang einer triggerbar eingerichteten monostabilen Kippstufe elektrisch verbunden ist, wobei der Triggereingang der monostabilen Kippstufe eingerichtet ist, zu steuern, ob der Digitalpegel an einem Digitalausgang der monostabilen Kippstufe einmalig wechselt oder nicht, und wobei der Triggereingang der monostabilen Kippstufe mit der Durchflussmesseinrichtung elektrisch verbunden ist, so dass an diesem das gepulste Messsignal anliegt.. Hierdurch wird bewirkt, dass beim Ausbleiben der Pulse des Messsignals bzw. in dem Fall, dass der Zeitabstand zwischen den Pulsen ein vorgegebenes Zeitintervall übersteigt, der Digitalzähler zurückgesetzt und damit die Versorgungsspannung zur Ansteuerung der elektronischen Leistungsschalter abgeschaltet wird. Vorteilhafterweise wird so die Beheizung des mindestens einen Heizelements innerhalb kürzester Zeit abgeschaltet, falls mittels der Durchflussmesseinrichtung kein Volumenstrom oder ein geringer als die Mindestvolumenstromvorgabe erfasst wird. Die monostabile Kippstufe wird auch als Univibrator bezeichnet.

Gemäß einer weiteren bevorzugten Ausführungsform ist die monostabile Kippstufe derart eingerichtet, dass der Digitalpegel des Digitalausgangs einmalig wechselt, sobald der Triggereingang frei von Pulsen des Messsignals der Durchflussmesseinrichtung ist. Anders ausgedrückt, wechselt an dem Digitalausgang der monostabilen Kippstufe nur dann der Digitalpegel, wenn die Durchflussmesseinrichtung keinen fließenden Volumenstrom erfasst. Beispielsweise ist die monostabile Kippstufe derart eingerichtet, dass der Digitalausgang während des Anliegens von Pulsen des Messsignals an dem Triggereingang einen Low-Pegel aufweist, wodurch der Digitalzähler sich im "Zählmodus" befindet. Bleiben die Pulse des Messsignals aus, nimmt der Digitalausgang der monostabilen Kippstufe einen High-Pegel ein und der Digitalzähler wird zurückgesetzt.

Eine weitere zweckmäßige Ausgestaltung der Erfindung ist dadurch gekennzeichnet, dass die Zeitkonstante der monostabilen Kippstufe derart gewählt ist, dass diese ein Vielfaches der jeweiligen maximalen Pulslänge des Messsignals beträgt. Hierdurch wird sichergestellt, dass der Digitalpegel an dem Digitalausgang der monostabilen Kippstufe nicht wechselt, so lange an dem Triggereingang Pulse des Messsignals der Durchflussmesseinrichtung anliegen. Ein Pegelwechsel an dem Digitalausgang der monostabilen Kippstufe erfolgt erst, wenn mindestens für die durch die Zeitkonstante bestimmte Zeit keine Pulse des Messsignals an dem Triggereingang eingehen.

Gemäß einer weiteren bevorzugten Ausbildung der Erfindung weist die Sicherheitsschaltung einen Digitalausgang auf, der eingerichtet ist, der Mikroprozessor-Steuerung zu signalisieren, ob die Versorgungsspannung zur Ansteuerung der elektronischen Leistungsschalter mittels Sicherheitsschaltung bereitgestellt ist oder nicht. Auf diese Weise ist es möglich, den jeweiligen Versorgungsspannungszustand zur Ansteuerung der elektronischen Leistungsschalter zusätzlich auch mittels der Mikroprozessor-Steuerung zu verarbeiten und auszuwerten.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:

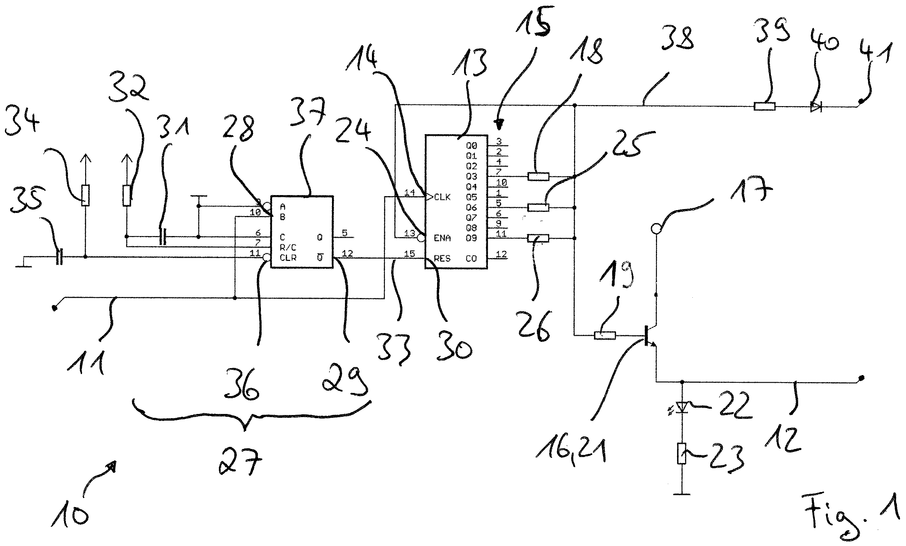

- Fig. 1: ein Schaltbild einer beispielhaften Ausführung der erfindungsgemäßen Sicherheitsschaltung.

Durchlauferhitzer zum Erwärmen einer Flüssigkeit sind aus dem Stand der Technik bereits hinlänglich bekannt. Auf eine gesonderte Darstellung eines solchen Durchlauferhitzers wird daher in der Zeichnung verzichtet. Der Durchlauferhitzer umfasst eine fluidgängige Kanalanordnung mit mindestens einem zum Erwärmen der Flüssigkeit eingerichteten Heizkanal. In dem Heizkanal ist mindestens ein elektrisches Heizelement, vorzugsweise ein Blankdrahtheizelement angeordnet.

Der Durchlauferhitzer umfasst weiter eine Steuerelektronik, die eingerichtet ist, elektronische Leistungsschalter anzusteuern, beispielsweise Halbleiterschaltelemente, wie Thyristoren oder Triacs, um das mindestens eine Heizelement elektrisch zu betreiben und die Heizleistung des Heizelements zu steuern. Die Steuerelektronik ist insbesondere als Mikroprozessor-Steuerung ausgebildet, weist also mindestens einen Mikroprozessor mit den üblichen weiteren elektronischen Komponenten auf, die für den Betrieb eines solchen Mikroprozessors regelmäßig erforderlich sind.

Des Weiteren umfasst der Durchlauferhitzer eine Durchflussmesseinrichtung, die elektrisch mit der Steuerelektronik verbunden und eingerichtet ist, den durch die Kanalanordnung fließenden Volumenstrom der Flüssigkeit zu erfassen und ein gepulstes Messsignal bereitzustellen, wobei die Anzahl der Pulse des Messsignals mit der Größe des Volumenstromes korreliert.

Die Durchflussmesseinrichtung ist vorzugsweise als Durchflussturbine ausgebildet, die im Strömungsweg der Flüssigkeit entweder innerhalb der Kanalanordnungen oder in einer Flüssigkeitszulauf- oder Flüssigkeitsablaufstrecke angeordnet ist. Die Durchflussmesseinrichtung ist insbesondere ausgebildet, ein gepulstes Messsignal bereitzustellen. Die Zahl der Pulse pro Zeiteinheit ist ein Maß für die Größe des durch den Durchlauferhitzer strömenden Volumenstromes der Flüssigkeit. Ist der Volumenstrom gleich null, ist das von der Durchflussmesseinrichtung erzeugte Messsignal pulsfrei, liegt also auf Low- oder High-Potenzial. Die Pulszahl des Messsignals - bei vorhandenem Volumenstrom ungleich null - ist vorzugsweise proportional zu Größe des Volumenstromes.

Der erfindungsgemäße Durchlauferhitzer umfasst eine Sicherheitsschaltung 10, von der in der Fig. 1 beispielhaft eine mögliche Schaltungsvariante gezeigt ist. Eingangsseitig ist die Sicherheitsschaltung 10 mit der Durchflussmesseinrichtung verbunden. Auf der Messsignalleitung 11 liegt somit das gepulste Messsignal an. Ausgangsseitig ist die Sicherheitsschaltung 10 über eine Versorgungsspannungsleitung 12 mit der - in der Zeichnung nicht gezeigten - Steuerelektronik verbunden.

Über die Versorgungsspannungsleitung 12 stellt die erfindungsgemäße Sicherheitsschaltung 10 eine Versorgungsspannung zur Ansteuerung der elektronischen Leistungsschalter bereit. Ob über die Versorgungsspannungsleitung 12 die Versorgungsspannung zur Ansteuerung der elektronischen Leistungsschalter bereitgestellt wird oder nicht, hängt davon ab, ob der mittels der Durchflussmesseinrichtung erfasste Volumenstrom größer als eine Mindestvolumenstromvorgabe ist oder nicht. Die Sicherheitsschaltung 10 ist also derart eingerichtet, dass ein Ansteuern der elektronischen Leistungsschalter erst dann möglich ist, wenn festgestellt wird, dass ein minimaler Volumenstrom durch die fluidgängige Kanalanordnung gemäß der Mindestvolumenstromvorgabe fließt.

Bleibt der mittels der Durchflussmesseinrichtung erfasste Volumenstrom unter dieser Mindestvolumenstromvorgabe, wird über die Versorgungsspannungsleitung 12 keine Versorgungsspannung zur Ansteuerung der elektronischen Leistungsschalter bereitgestellt und somit ein Beheizen des mindestens einen Heizelements bei zu geringem Volumenstrom in jeden Fall vermieden. Mittels der Sicherheitsschaltung 10 findet auch in jedem Fall eine zuverlässige Abschaltung des oder der Heizelemente statt, sobald der erfasste Volumenstrom die Mindestvolumenstromvorgabe unterschreitet. Diese Abschaltung erfolgt unabhängig von der Mikroprozessor-Steuerung. Durch die erfindungsgemäße Sicherheitsschaltung ist auch dann ein zuverlässiges Abschalten der Heizelemente gewährleistet, wenn die Mikroprozessor-Steuerung gestört ist.

Vorzugsweise weist die erfindungsgemäße Sicherheitsschaltung 10 mindestens einen Digitalzähler 13 auf. Der Zählereingang 14 des Digitalzählers 13 ist über die Messsignalleitung 11 mit der Durchflussmesseinrichtung elektrisch verbunden, so dass das gepulste Messsignal an dem Zählereingang 14 des Digitalzählers 13 liegt. Der Digitalzähler 13 weist vorzugsweise eine Mehrzahl an Zählerausgängen 15 auf. Wie in Fig. 1 gezeigt, verfügt der Digitalzähler 13 beispielsweise über neun der Zählerausgänge 15, die im Schaltbild gemäß Fig. 1 als Ausgänge Q0 bis Q9 bezeichnet sind.

Mindestens einer der Zählerausgänge 15 ist mit dem Eingang eines elektronischen Schaltelements 16 elektrisch verbunden. Das elektronische Schaltelement 16 ist eingerichtet, die Versorgungsspannung, die in Fig. 1 beispielhaft an Pin 17 anliegt, zur Ansteuerung der Leistungsschalter freizugeben oder zu sperren. Fig. 1 zeigt beispielhaft, wie einer der Zählerausgänge 15, nämlich Q3, über die Serienschaltung des Widerstandes 18 und des Vorwiderstandes 19 mit der Basis 20 des als NPN-Transistor 21 ausgebildeten Schaltelements verbunden ist. Das Vorhandensein der Versorgungsspannung zur Ansteuerung der Leistungsschalter auf der Versorgungsspannungsleitung 12 kann optional über die Leuchtdiode 22 mit ihrem Vorwiderstand 23 angezeigt werden.

Der Digitalzähler 13 weist vorzugsweise einen Zählersperreingang 24 auf. Der Zählersperreingang 24 des Digitalzählers 13 ist eingerichtet, in Abhängigkeit des an diesem anliegenden Signalpegels die Zählfunktion des Digitalzählers 13 zu unterbrechen bzw. fortzuführen. Der Zählersperreingang 24 ist - wie in Fig. 1 gezeigt - über den Widerstand 18, der auch als 0-Ohm-Brücke ausgebildet sein kann, mit einem der Zählerausgänge 15 elektrisch verbunden.

Erreicht der Digitalzähler 13 durch die eigehenden Impulse am Zählereingang 14 einen Zählerstand, der dazu führt, dass Q3 der Zählerausgänge 15 von einem Low-Pegel zu einem High-Pegel wechselt, so wird auch der Zählersperreingang 24 auf High-Pegel gelegt und der Zählerstand des Digitalzählers 13 quasi "eingefroren". Anders ausgedrückt ist der Digitalzähler 13 so geschaltet, dass dieser beim Erreichen eines bestimmten Zählerstandes in Selbsthaltung geht. Bei welchem Zählerstand dies geschieht, ist abhängig davon, welcher der Zählerausgänge 15 an dem Zählersperreingang 24 rückgeführt ist. In der Zeichnung sind hierfür die Widerstände bzw. 0-Ohm-Brücken 25, 26 gezeigt, die wahlweise anstelle des Widerstandes 18 bestückt werden.

Weiter umfasst die Sicherheitsschaltung 10 eine monostabile Kippstufe 27. Die monostabile Kippstufe 27 ist triggerbar eingerichtet, das heißt über einen Triggereingang 28 ist es möglich, zu steuern, ob der Digitalpegel an einem Digitalausgang 29 der monostabilen Kippstufe (27) wechselt oder nicht. Der Triggereingang 28 der monostabilen Kippstufe 27 ist über die Messsignalleitung 11 der Durchflussmesseinrichtung elektrisch verbunden, so dass einem Triggereingang 28 das gepulste Messsignal der Durchflussmesseinrichtung anliegt.

Der Digitalausgang 29 der monostabilen Kippstufe 27 ist mit einem Rücksetz-Eingang 30 des Digitalzählers 13 verbunden. Fließt keine Flüssigkeit durch die fluidgängige Kanalanordnung ist das von der Durchflussmesseinrichtung bereitgestellte Messsignal auf der Messsignalleitung 11 pulsfrei, weist also einen konstanten elektrischen Pegel auf.

Die Zeitkonstante der monostabilen Kippstufe 27, also die Verzögerungszeit, die vergeht, bis nach einem Triggervorgang über den Triggereingang 28 der Digitalpegel am Digitalausgang 29 wechselt, wird durch die Kapazität 31 sowie die Größe des Widerstandes 32 bestimmt. Liegt wie zuvor beschrieben an dem Triggereingang 28 ein Signal mit konstantem Pegel an, wechselt der Digitalausgang 29 spätestens nach der durch die Kapazität 31 und den Widerstand 32 festgelegten Zeitkonstante seinen Digitalpegel.

Über die Leitung 33 gelangen diese Digitalimpulse an den Rücksetz-Eingang 30 des Digitalzählers 13, so dass bei Ausbleiben von Pulsen des Messsignals über die Messsignalleitung 11 der Zählerstand des Digitalzählers 13 rückgesetzt wird, sämtliche Ausgänge Q0 bis Q9 des Digitalzählers einen Low-Pegel annehmen und die Versorgungsspannung zur Ansteuerung der elektronischen Leistungsschalter über das Schaltelement 16 weggeschaltet wird, so dass die Versorgungsspannungsleitung 12 spannungsfrei geschaltet wird.

Weiter bevorzugt umfasst die monostabile Kippstufe 27 den Widerstand 34 sowie den Kondensator 35, die ein Zeitglied bilden, über das ein Rücksetz-Eingang 36 des integrierten Schaltkreises 37 während des Einschaltvorgangs der Sicherheitsschaltung 10 in einem definierten Zustand versetzt wird. Der integrierte Schaltkreis ist beispielsweise ein wiedertriggerbarer monostabiler Multivibrator 27 mit Reset-Funktion, beispielsweise ein integrierter Schaltkreis vom Typ 74 HC123. Weiter bevorzugt kommt als Digitalzähler 13 ein integrierter Schaltkreis vom Typ 74 HC 4017 zum Einsatz.

Die zuvor beschriebene monostabile Kippstufe 27 ist folglich derart eingerichtet, dass der Digitalpegel an dem Digitalausgang 29 wechselt, sofern der Triggereingang 28 frei von Pulsen des Messsignals der Durchflussmesseinrichtung ist.

Vorzugsweise ist die Periodendauer der Digitalimpulse bestimmende Zeitkonstante der monostabilen Kippstufe 27 derart gewählt, dass diese ein Vielfaches der jeweiligen maximalen Pulslänge des Messsignals beträgt. Durch die Wahl der genannten Zeitkonstante der monostabilen Kippstufe 27 wird erreicht, dass am Digitalausgang 29 erst dann ein Wechsel des Digitalpegels erfolgt, wenn über die Messsignalleitung 11 keine Pulse von der Durchflussmesseinrichtung mehr kommen oder, wenn der zeitliche Abstand zwischen Pulsen aufgrund eines geringen Volumenstroms so groß geworden ist, dass dieser größer als die durch die Kapazität 31 und den Widerstand 32 definierte Zeitkonstante ist. So wird erreicht, dass der Digitalzähler 13 erst dann zurückgesetzt wird, wenn mittels der Durchflussmesseinrichtung kein oder nur ein äußerst geringer Volumenstrom festgestellt wird. In beiden letztgenannten Fällen wird über das elektronische Schaltelement 16 jeweils die Versorgungsspannung zur Ansteuerung der elektronischen Leistungsschalter weggeschaltet.

Optional ist eine Zählerausgangsleitung 38, die elektrisch mit einem der jeweiligen Zählerausgänge 15 verbunden ist, über einen Widerstand 39 mit nachgeschalteter Diode 40 an einen Anschluss 41 herausgeführt. Am Anschluss 41 kann als Status-Signal der Zustand des jeweiligen Zählerausgangs 15 mittels der Steuerelektronik abgefragt werden. Die Diode 40 verhindert eine Rückspeisung über die Steuerelektronik.

## Patentansprüche

1. Durchlauferhitzer zum Erwärmen einer Flüssigkeit, umfassend
eine fluidgängige Kanalanordnung mit mindestens einem zum Erwärmen der Flüssigkeit eingerichteten Heizkanal mit mindestens einem darin angeordneten elektrischen Heizelement,
einer Steuerelektronik, die eingerichtet ist, elektronische Leistungsschalter anzusteuern, um das mindestens eine Heizelement elektrisch zu betreiben und die Heizleistung des Heizelements zu steuern, wobei die Steuerelektronik als Mikroprozessor-Steuerung ausgebildet ist,
eine Durchflussmesseinrichtung, die elektrisch mit der Steuerelektronik verbunden und eingerichtet ist, den durch die Kanalanordnung fließenden Volumenstrom der Flüssigkeit zu erfassen und ein gepulstes Messsignal bereitzustellen, wobei die Anzahl der Pulse des Messsignals mit der Größe des Volumenstromes korreliert,
**dadurch gekennzeichnet, dass**
der Durchlauferhitzer eine Sicherheitsschaltung (10) umfasst, die eingangsseitig mit der Durchflussmesseinrichtung verbunden ist und ausgangsseitig mit der Steuerelektronik verbunden ist, um eine Versorgungsspannung zur Ansteuerung der elektronischen Leistungsschalter in Abhängigkeit davon bereitzustellen, ob der mittels der Durchflussmesseinrichtung erfasste Volumenstrom größer als eine Mindestvolumenstromvorgabe ist.

2. Durchlauferhitzer nach Anspruch 1, **dadurch gekennzeichnet, dass** die Sicherheitsschaltung (10) mindestens einen Digitalzähler (13) umfasst, dessen Zähleingang (14) mit der Durchflussmesseinrichtung verbunden ist, so dass das gepulste Messsignal an dem Zähleingang (14) des Digitalzählers (13) anliegt, wobei mindestens ein Zählerausgang (15) des Digitalzählers (13) mit dem Eingang eines elektronischen Schaltelements verbunden ist, das entsprechend des Zustandes des Zählerausgangs (15) die Versorgungsspannung zur Ansteuerung der Leistungsschalter freigibt oder sperrt.

3. Durchlauferhitzer nach Anspruch 2, **dadurch gekennzeichnet, dass** der Digitalzähler (13) mindestens einen Zählersperreingang (24) aufweist und, dass dieser Zählersperreingang (24) mit dem mindestens einen Zählerausgang (15) elektrisch verbunden ist.

4. Durchlauferhitzer nach Anspruch 2 oder 3, **dadurch gekennzeichnet, dass** der Digitalzähler (13) als Ringzähler ausgebildet ist.

5. Durchlauferhitzer nach einem der Ansprüche 2 bis 4, **dadurch gekennzeichnet, dass** der Digitalzähler (13) einen Rücksetz-Eingang (36) aufweist, der mit einem Digitalausgang (29) einer triggerbar eingerichteten monostabilen Kippstufe (27) elektrisch verbunden ist, wobei der Triggereingang (28) der monostabilen Kippstufe (27) eingerichtet ist, zu steuern, ob der Digitalpegel an einem Digitalausgang (29) der monostabilen Kippstufe (27) einmalig wechselt oder nicht, und wobei der Triggereingang (28) der monostabilen Kippstufe mit der Durchflussmesseinrichtung elektrisch verbunden ist, so dass an diesem das gepulste Messsignal anliegt.

6. Durchlauferhitzer nach Anspruch 5, **dadurch gekennzeichnet, dass** die monostabile Kippstufe (27) derart eingerichtet ist, dass der Digitalpegel des Digitalausgangs(29) einmalig wechselt, sobald der Triggereingang (28) frei von Pulsen des Messsignals der Durchflussmesseinrichtung ist.

7. Durchlauferhitzer nach Anspruch 5 oder 6, **dadurch gekennzeichnet, dass** die Zeitkonstante der monostabilen Kippstufe (27) derart gewählt ist, dass diese ein Vielfaches der jeweiligen maximalen Pulslänge des Messsignals beträgt.

8. Durchlauferhitzer nach einem der Ansprüche 1 bis 7, **dadurch gekennzeichnet, dass** die Sicherheitsschaltung (10) einen Digitalausgang (29) aufweist, der eingerichtet ist, der Mikroprozessor-Steuerung zu signalisieren, ob die Versorgungsspannung zur Ansteuerung der elektronischen Leistungsschalter mittels Sicherheitsschaltung (10) bereitgestellt ist oder nicht.
